# EUROPEAN PATENT APPLICATION

(11) **EP 4 385 339 A1**
(43) Date of publication of application: **19.06.2024**
(21) Application number: 22869968.2
(22) Date of filing: 13.09.2022
(51) Int. Cl.: A23L 27/50

(54) **SOY SAUCE RICH IN ORGANIC ACID**

(30) Priority: 14.09.2021 JP 2021149272
(71) Applicant: Kikkoman Corporation, Noda-shi, Chiba 278-8601 (JP)
(72) Inventor: OHTA, Akira, Noda-Shi, Chiba 278-8601 (JP); HANADA, Yoichi, Noda-Shi, Chiba 278-8601 (JP)
(74) Representative: Kramer Barske Schmidtchen Patentanwälte PartG mbB
(86) International application number: PCT/JP2022/034216
(87) International publication number: WO 2023/042821

(57) **Abstract**

An object of the invention is to provide a soy sauce with high palatability having a favorable taste while containing a large amount of lactic acid. The object is achieved by a soy sauce which has a lactic acid content of 2.5 w/v% or more and in which the lactic acid is not externally added, a method for manufacturing a soy sauce including a step of obtaining a soy sauce *moromi* soup by subjecting a soy sauce *moromi* to a solid-liquid separation treatment and a step of obtaining a soy sauce having a lactic acid content of 2.5 w/v% or more by subjecting the soy sauce *moromi* soup to lactic acid fermentation with a soy sauce lactic acid bacterium while adjusting to pH 5.0 to 7.0 using an alkaline agent and the like.

## Description

### TECHNICAL FIELD

The present invention relates to a soy sauce which is rich in an organic acid such as lactic acid.

### BACKGROUND ART

It is known that organic acids such as lactic acid strongly affect the tastes of foods. For example, in a method for manufacturing a soy sauce by a brewing process, as lactic acid fermentation advances more vigorously, favorable tastes such as fresh acid taste, "unity of taste" and "stretch of taste" are given to the soy sauce by various organic acids such as lactic acid, and a soy sauce having a better taste tends to be obtained.

Methods for increasing the lactic acid content of a soy sauce are a method by externally adding lactic acid or sodium lactate, namely a salt thereof, to a soy sauce, a method by increasing the production amount of lactic acid in lactic acid fermentation and the like. As the methods by increasing the production amount of lactic acid in lactic acid fermentation, a method including adding an alkaline agent such as sodium hydrogen carbonate to a *moromi* containing a soy sauce *koji* and a saline solution to adjust the pH to 5.6 to 6.2 and then performing lactic acid fermentation and the like are known (for example, see Patent Literature 1).

### CITATION LIST

### PATENT LITERATURE

Patent Literature 1: JPS62-18146B

### SUMMARY OF INVENTION

### TECHNICAL PROBLEM

When the method by externally adding lactic acid to a soy sauce is used, of the methods for increasing the lactic acid content of a soy sauce, however, the pH of the obtained soy sauce becomes too low, and the method is not practical. Moreover, according to the investigation by the present inventors, when the method by externally adding sodium lactate to a soy sauce is used, the obtained soy sauce has problems because the soy sauce has excessive salty taste and has unfavorable tastes such as pungency in the initial taste and an unnatural taste.

According to the method described in Patent Literature 1, the lactic acid content of the obtained soy sauce can be increased. When the method described in Patent Literature 1 is used, however, the amount of the alkaline agent added has to be increased to adjust the lactic acid concentration to 2,000 mg% (2.0 w/v%) or more, and there is a problem because the taste of the obtained soy sauce is deteriorated due to the alkaline odor and the suppression of growth of the yeast. Thus, the soy sauce obtained by the method described in Patent Literature 1 has a problem because the amount of lactic acid contained is 1.0 w/v% to 2.0 w/v%, which is still low.

Thus, in the invention, the problem to be solved by the invention is to provide a soy sauce with high palatability having a favorable taste while containing a large amount of lactic acid.

### SOLUTION TO PROBLEM

To solve the problem, the present inventors have intensively studied the raw materials and the intermediate products used for manufacturing a soy sauce, the conditions and the steps of manufacture and the like. The inventors have thus made the following findings: in the method by adding an alkaline agent to a *moromi* as in the method described in Patent Literature 1, addition of a large amount of the alkaline agent and strong stirring are required to make the pH of the *moromi* during fermentation even, because the solid content of the *moromi* is high and because the viscosity becomes about 1,000 cP or more; such strong stirring causes early fermentation of the yeast before the lactic acid amount becomes high enough: and early fermentation of the yeast suppresses lactic acid fermentation. Thus, the present inventors have found that it is difficult to make the amount of lactic acid more than 2.0 w/v% by the method by adding an alkaline agent to a *moromi* regardless of the timing of the addition of the alkaline agent.

Thus, the present inventors have further repeated trial and error to obtain a soy sauce rich in an organic acid such as lactic acid and thus focused on lactic acid fermentation using a pressed soup obtained by removing the solid content from a *moromi.* Because the pressed soup has a low solid content, the pH can be adjusted even, even when the pressed soup is stirred slowly. Thus, in lactic acid fermentation using the pressed soup, by appropriately adding an adequate amount of an alkaline agent according to the decrease in the pH due to the lactic acid produced during the lactic acid fermentation, the pH can be adjusted in a predetermined range while early fermentation of the yeast is suppressed. By performing continuous lactic acid fermentation using such a pressed soup, surprisingly, a soy sauce having a lactic acid content of 2.5 w/v% or more was successfully obtained.

Further surprisingly, the obtained soy sauce rich in lactic acid had a strong favorable taste, a weak unfavorable taste, suppressed salty taste and high palatability. The present inventors have thus succeeded in creating a soy sauce with high palatability having a favorable taste while containing a large amount of lactic acid, as a solution to the problem of the invention. The invention is an invention that has been completed based on such successful examples or findings.

Thus, according to each aspect of the invention, the followings are provided.
[1] A soy sauce which has a lactic acid content of 2.5 w/v% or more, wherein the lactic acid is not externally added.
[2] A soy sauce which has a lactic acid content of 2.5 w/v% or more and which is a lactic acid fermented product of a pressed soup of a soy sauce *koji.*
[3] The soy sauce according to [2], wherein the lactic acid fermented product of a pressed soup of a soy sauce *koji* is a lactic acid fermented product of a pressed soup of a soy sauce *koji* obtained using a soy sauce lactic acid bacterium, *Tetragenococcus halophilus.*
[4] The soy sauce according to [3], wherein the soy sauce contains the soy sauce lactic acid bacterium in such a manner that the turbidity is 500 ppm or more.
[5] A method for manufacturing a soy sauce, including
   a step of obtaining a soy sauce *moromi* soup by subjecting a soy sauce *moromi* to a solid-liquid separation treatment and
   a step of obtaining a soy sauce having a lactic acid content of 2.5 w/v% or more by subjecting the soy sauce *moromi* soup to lactic acid fermentation with a soy sauce lactic acid bacterium while adjusting to pH 5.0 to 7.0 using an alkaline agent.
[6] The method for manufacturing a soy sauce according to [5], wherein the alkaline agent is at least one kind of alkaline agent selected from the group consisting of sodium carbonate, sodium hydroxide and sodium hydrogen carbonate.

### ADVANTAGEOUS EFFECTS OF INVENTION

According to the invention, a soy sauce with high palatability having a favorable taste while containing a large amount of lactic acid is obtained. The soy sauce of an aspect of the invention is rich in a soy sauce lactic acid bacterium in addition to lactic acid and thus has reduced salty taste while having a favorable taste and has an excellent flavor with stronger *umami* and *koku* attribute in the initial taste and the aftertaste, without losing the taste balance, compared to a regular soy sauce. Moreover, the aroma peculiar to a soy sauce is mild in the soy sauce of an aspect of the invention because alcohol fermentation is not performed, while the raw material odor as the off-flavor that is generally felt with a soy sauce with insufficient alcohol fermentation is not easily felt. The soy sauce of an aspect of the invention is an extremely excellent seasoning which widely fits various foods including Japanese foods and can adjust the taste.

### BRIEF DESCRIPTION OF DRAWINGS

[FIG. 1] FIG. 1 is a figure showing the measurement results of the pH value and the lactic acid concentration of the fermented liquid over time during the production of the high-lactic acid soy sauce of example 1 as described in the Examples below.
[FIG. 2] FIG. 2 is a figure showing the results of the sensory evaluation of the lactic acid-adjusted lactic acid soy sauces and the cleared high-lactic acid soy sauce performed in example 2 as described in the Examples below.
[FIG. 3] FIG. 3 is a figure showing the results of the sensory evaluation of the pressed soup and the soy sauces with externally added lactic acid performed in example 3 as described in the Examples below.
[FIG. 4] FIG. 4 is a figure showing the results of the sensory evaluation of the cleared high-lactic acid soy sauce, the turbidity-adjusted lactic acid soy sauces and the high-lactic acid soy sauce performed in example 4 as described in the Examples below.

### DESCRIPTION OF EMBODIMENTS

Hereinafter, the details of the aspects of the invention will be explained, however, the invention is not limited only to the matters of this item, and the invention can take various aspects as long as the object of the invention is achieved.

Each term in this description is used in the meaning generally used by those skilled in the art in the field of foods including seasonings such as soy sauce unless otherwise specified and should not be interpreted as having an unduly restrictive meaning. Because the speculations and the theories given in this description have been made based on the findings and the experiences made by the present inventors so far, the invention should not adhere only to such speculations and theories.

The "content" has the same meaning as concentration and means the ratio of the amount of a component with respect to the total amount of the soy sauce. The total amount of the contents of the components, however, does not exceed 100%. The "w/v%" has the same meaning as "% (w/v)" and represents the mass/volume percentage concentration, and the "v/v%" has the same meaning as "% (v/v)" and represents the volume percentage concentration.

The "ppm" is a unit as the generally known meaning, and specifically, 1 ppm is 1/10⁶ and is 1 µg/g in terms of mass and substantially 1 mg/l in terms of mass volume.

The "to" in a numerical range refers to a range including the values before and after the term, and for example, "500 ppm to 10,000 ppm" means the range which is 500 ppm or more and 10,000 ppb or less.

The "contain/include" means that an element other than the element(s) which is clearly stated to be contained/included can be added (having the same meaning as "contain/include at least") but includes "consist of" and "consist essentially of". That is, the "contain/include" can mean that the subject matter contains/includes a clearly stated element(s) and any one, two or more kinds of element, consists of a clearly stated element(s) or consists essentially of a clearly stated element(s). The element is a limiting subject matter such as a component, a step, a condition and a parameter or the like.

The term "and/or" means any one, an arbitrary combination of two or more or a combination of all of a plurality of related items listed.

The digits of an integer value are the same as the significant figures. For example, 1 has one significant figure, and 10 has two significant figures. The decimal places of a decimal to the right of the decimal point are the same as the significant figures. For example, 0.1 has one significant figure, and 0.10 has two significant figures.

The lactic acid which is "not externally added" means lactic acid mainly produced by the action of the lactic acid bacterium in the manufacturing process of the soy sauce and means that the lactic acid is not lactic acid or a lactate which is artificially added to the soy sauce.

The "fermentation" and the "aging" are not strictly distinguished and are sometimes referred to as fermentation by combining these.

The "taste inherent in a soy sauce" refers to the taste of an unheated soy sauce manufactured by an ordinary brewing process using soybeans and wheat as raw materials which is felt with the tongue when taken into the mouth.

The "sweetness" refers to the taste felt when table sugar is taken into the mouth.

The "salty taste" refers to the taste felt when dietary sodium chloride (sodium chloride) is taken into the mouth.

The "bitterness" refers to the unpleasant taste felt when a burned matter is taken into the mouth.

The "*umami*" refers to the taste inherent in a soy sauce wrapping around the whole tongue felt when an unheated soy sauce is taken into the mouth. Of the *umami,* the *"umami* in the initial taste" refers to the *umami* felt while the soy sauce is in the mouth, and the *"umami* in the aftertaste" refers to the *umami* left after swallowing.

The "smoothness" refers to the spread of the taste with unity inherent in a soy sauce in which no single taste stands out when taken into the mouth.

The "*koku* attribute" is the taste combining sweetness, *umami* and smoothness and refers to the taste inherent in a soy sauce which is felt with the tongue and which lasts and spreads.

The "meat-like taste" refers to strong *umami* which lasts and spreads and which reminds of meat such as chicken, pork and beef or seafood such as Seachicken (tuna) and shellfish.

The "pungency in the initial taste" refers to salty taste, bitterness and acid taste which are felt while the soy sauce is in the mouth and which differently stand out compared to the taste inherent in a soy sauce.

The "unnatural taste" refers to the taste without the unity of the five tastes felt in the taste inherent in a soy sauce due to salty taste, bitterness, acid taste or the like which stands out.

### [Soy Sauce]

The soy sauce of an aspect of the invention has a lactic acid content of 2.5 w/v% or more. Here, the lactic acid is not lactic acid which is externally added but is one produced by lactic acid fermentation in the steps of manufacturing the soy sauce.

The soy sauce of an aspect of the invention is obtained by performing lactic acid fermentation in such a manner that the lactic acid content becomes 2.5 w/v% or more and thus is a soy sauce having an excellent flavor with enhanced *umami* and *koku* attribute while having the flavor inherent in a soy sauce. The soy sauce of an aspect of the invention is used for adjusting the taste of a food like a regular soy sauce.

In the method for manufacturing a soy sauce using a brewing process (hereinafter sometimes called a method for manufacturing a regular soy sauce in this description), a soy sauce *moromi* is obtained by putting a soy sauce *koji* into a saline solution and performing lactic acid fermentation. The lactic acid content of the soy sauce *moromi* obtained in this manner is generally 1 w/v% or less and is often 0.5 w/v% or less. Despite such circumstances, it is speculated that various organic acids and the like in addition to lactic acid are produced in abundance when lactic acid fermentation is promoted under conditions under which the lactic acid content becomes 2.5 w/v% or more. It is believed that, as a result, the obtained soy sauce has stronger *umami* and *koku* attribute and has an excellent taste without losing the taste balance compared to a regular soy sauce, due to the influence of the organic acids and the like including lactic acid.

The soy sauce (also referred to as *shoyu*) is a soy sauce with the generally known meaning, and examples thereof include those stated in the "Quality Labeling Standards for Soy Sauce" and the "Japanese Agricultural Standards for Soy Sauce" in Ministry of Agriculture, Forestry and Fisheries Notification. Specific examples of the soy sauce include a *koikuchi* (dark-colored) soy sauce, an *usukuchi* (light-colored) soy sauce, a *shiro* (very light-colored) soy sauce, a *tamari* (rich) soy sauce and a rebrewed soy sauce. Additional examples thereof include an unheated soy sauce, a *dashi* (soup stock) soy sauce, a *teri* soy sauce (a soy sauce for imparting a glaze), a *kiage* (just pressed) soy sauce, a fast brewed soy sauce, an amino acid-mixed soy sauce, a soy sauce with a reduced sodium chloride content, a soy sauce with a low sodium chloride content and the like. The soy sauce may be one type alone of those exemplified above or may be a combination of two or more types thereof. The soy sauce of an aspect of the invention is preferably a soy sauce obtained by a method for manufacturing a soy sauce using a brewing process.

The lactic acid content of the soy sauce of an aspect of the invention is not particularly limited as long as the content is 2.5 w/v% or more, but for example, in order that the soy sauce of an aspect of the invention has enhanced *umami* and/or *koku* attribute compared to a regular unheated soy sauce, the content is preferably 3.5 w/v% or more, more preferably 4.5 w/v% or more, further preferably 5.0 w/v% or more. The upper limit of the lactic acid content is not particularly limited but is preferably 20 w/v% or less, more preferably 10 w/v% or less. The lactic acid content is measured by the method described in the Examples below.

The soy sauce of an aspect of the invention contains a soy sauce lactic acid bacterium and thus has reduced salty taste and/or bitterness and has a mild taste. Moreover, due to the contained soy sauce lactic acid bacterium, *umami*, *koku* attribute, meat-like taste and/or smoothness are felt strong, and sweetness tends to become more intense. Thus, to make at least one type of taste selected from the group consisting of *umami*, *koku* attribute, meat-like taste and smoothness excellent, the soy sauce of an aspect of the invention preferably contains the soy sauce lactic acid bacterium in such a manner that the turbidity is 500 ppm or more, more preferably contains the soy sauce lactic acid bacterium in such a manner that the turbidity is 1,000 ppm or more or 2,000 ppm or more, further more preferably contains the soy sauce lactic acid bacterium in such a manner that the turbidity is 3,000 ppm or more or 4,000 ppm or more, still further more preferably contains the soy sauce lactic acid bacterium in such a manner that the turbidity is 5,000 ppm or more or 6,000 ppm or more. The upper limit of the turbidity is not particularly limited and is, for example, preferably 20,000 ppm, more preferably 10,000 ppm. Thus, the soy sauce of an aspect of the invention preferably contains the soy sauce lactic acid bacterium in such a manner that the turbidity is 500 ppm to 20,000 ppm. The turbidity is measured by the method described in the Examples below.

When the soy sauce of an aspect of the invention is manufactured, contamination of a large amount of yeast suppresses the production of lactic acid, and alcohol is produced instead. In other words, when the alcohol production is suppressed, the growth of yeast can be prevented, and the growth of the lactic acid bacterium and the production of lactic acid can be promoted. From this point, the alcohol content of the soy sauce *moromi* soup in the lactic acid fermentation stage is preferably less than 1 v/v%, more preferably 0.9 v/v% or less, further more preferably 0.5 v/v% or less, still further more preferably 0.20 v/v% or less. The lower limit of the alcohol content is not particularly limited and may be, for example, substantially 0.0 v/v%. Thus, the alcohol content of the soy sauce *moromi* soup in the lactic acid fermentation stage is preferably 0.0 v/v% to 1 v/v%. The alcohol content is measured by the method described in the Examples below.

The soy sauce of an aspect of the invention can be formed into a container-packed soy sauce packed in a sealable airtight container or a sealed container. The container is not particularly limited as long as it is a container which is not contaminated with a solid or liquid foreign substance and which can prevent loss or evaporation of the packed soy sauce or a container which is not contaminated with gas during regular handling, transport or storage, but examples thereof include packaging containers such as a single-layer or laminate film bag, a retort pouch, a vacuum pack, a molded container, a bottle and a can made of a metal such as aluminum and steel, a paper, a plastic such as PET, a glass or the like. The container-packed soy sauce can be distributed and sold in the market independently by itself.

The soy sauce of an aspect of the invention can be used in the same manner as a regular soy sauce. That is, the soy sauce of an aspect of the invention can be used alone or by mixing or combining with another component such as a soup stock, an acidulant, an amino acid, a nucleic acid, an organic acid, a protein hydrolysate, a sugar, a sake, a sweet sake, an alcohol, a thickener, an emulsifier and an inorganic salt in addition to water, a vegetable component, a yeast extract, a meat extract, a fruit juice, a spice, a chemical seasoning or a flavor, for cooking various food materials or for a processing method therefor. For example, the soy sauce of an aspect of the invention can be used for various foods such as Japanese foods, Western foods and Chinese foods and can be used specifically for deep-fried foods, grilled slices of meat, udon, soba, ramen, Hamburg steak, meatballs, simmered chicken and root vegetables, teriyaki, curry, stew, hashed beef, etc., but it is not limited thereto.

As a non-limiting specific mode of the soy sauce of an aspect of the invention, for example, a soy sauce having the lactic acid content below is exemplified.
Lactic acid content: 2.5 w/v% to 10 w/v%

As another non-limiting specific mode of the soy sauce of an aspect of the invention, for example, a soy sauce having the lactic acid content below and the turbidity below is exemplified.
Lactic acid content: 2.5 w/v% to 10 w/v%
Turbidity: 500 ppm to 10,000 ppm

The soy sauce of an aspect of the invention can be obtained by subjecting a pressed soup of a soy sauce *moromi* to lactic acid fermentation in such a manner that the lactic acid content is 2.5 w/v% or more. Thus, another aspect of the invention is a soy sauce which has a lactic acid content of 2.5 w/v% or more and which is a lactic acid fermented product of a pressed soup of a soy sauce *moromi.*

### [Method for Manufacturing Soy Sauce]

According to another aspect of the invention, a method for manufacturing the soy sauce of an aspect of the invention is provided. The method of an aspect of the invention includes a step of obtaining a soy sauce *moromi* soup by subjecting a soy sauce *moromi* to a solid-liquid separation treatment and a step of obtaining a soy sauce having a lactic acid content of 2.5 w/v% or more by subjecting the soy sauce *moromi* soup to lactic acid fermentation with a soy sauce lactic acid bacterium while adjusting to pH 5.0 to 7.0 using an alkaline agent.

The outline of the method of an aspect of the invention is a method including obtaining a soy sauce *moromi* soup by subjecting a soy sauce *moromi* obtainable after putting a soy sauce *koji* into a saline solution and performing lactic acid fermentation with a soy sauce lactic acid bacterium by a method for manufacturing a regular soy sauce to solid-liquid separation and subsequently subjecting the soy sauce *moromi* soup to lactic acid fermentation while adjusting to predetermined pH. A soy sauce is manufactured by obtaining a soy sauce *koji* by inoculating a seed *koji* starter including a *koji* mold into a mixture of a protein raw material such as soybeans denatured by heating and a starch raw material such as wheat pregelatinized by heating, followed by culturing to make a *koji*, subsequently obtaining a soy sauce *moromi* by putting the obtained soy sauce *koji* into a saline solution, followed by lactic acid fermentation and aging, subsequently obtaining an aged *moromi* by subjecting the obtained soy sauce *moromi* to yeast fermentation and aging, subsequently obtaining an unheated soy sauce by subjecting the obtained aged *moromi* to a pressing treatment or a filtration treatment and subsequently heating the obtained unheated soy sauce in the case of a brewing process.

In the method of an aspect of the invention, the soy sauce *moromi* after lactic acid fermentation is not continuously subjected to yeast fermentation unlike a method for manufacturing a regular soy sauce, but the soy sauce *moromi* is separated into an insoluble solid part (soy sauce *moromi* concentrate) and a liquid part (soy sauce *moromi* soup), and subsequently the soy sauce *moromi* soup is subjected to lactic acid fermentation under predetermined pH conditions. Therefore, the method includes a step of obtaining a soy sauce *moromi* soup from a soy sauce *moromi* and a step of performing lactic acid fermentation with pH adjustment. The lactic acid content of the thus obtained soy sauce can be 2.5 w/v% or more. The method of an aspect of the invention preferably includes a step of obtaining a soy sauce *moromi* as a pre-stage.

The step of obtaining a soy sauce *moromi* may be a step until a soy sauce *moromi* is obtained in a method for manufacturing a regular soy sauce. A specific aspect of the step of obtaining a soy sauce *moromi* is a step of obtaining a soy sauce *koji* by inoculating a seed *koji* starter into a soy sauce raw material that is a mixture of soybeans denatured by steaming, roasted crushed cereal grains and the like and performing *koji* making with aeration at 10°C to 40°C for about one day to four days and subsequently subjecting a material obtained by putting the soy sauce *koji* into a saline solution having a sodium chloride concentration of 15% (w/v) to 35% (w/v) and further arbitrarily adding a soy sauce lactic acid bacterium thereto to lactic acid fermentation and aging at 10°C to 40°C for 10 days to 200 days, preferably for 15 days to 40 days, while appropriately stirring, thereby obtaining a soy sauce *moromi.*

The soy sauce raw material is not particularly limited, but examples thereof include soybeans such as whole soybeans and defatted soybeans, cereal grains such as wheat, barley, naked barley and Job's tears, cereal grain gluten, rice, corn and the like.

The seed *koji* starter is not particularly limited as long as it is a *koji* mold that is generally utilized when manufacturing a soy sauce, but examples thereof include microorganisms of the genus *Aspergillus* such as *Aspergillus oryzae* and *Aspergillus sojae* and the like. The soy sauce lactic acid bacterium is not particularly limited as long as it is a soy sauce lactic acid bacterium that is generally utilized when manufacturing a soy sauce, but examples thereof include salt-tolerant lactic acid bacteria such as *Tetragenococcus halophilus* and the like.

In the step of obtaining a soy sauce *moromi,* when the amount of the starch raw material such as wheat and rice is small in the soy sauce raw material, the reducing sugar content becomes small, and a soy sauce *moromi* soup with which lactic acid fermentation can be appropriately performed may not be able to be obtained. Therefore, it is preferred that the amount of the starch raw material such as wheat and rice in the soy sauce raw material is such an amount that a soy sauce *moromi* having a high reducing sugar content can be obtained. However, this shall not apply when a soy sauce *moromi* having a high reducing sugar content is obtained by adding a reducing sugar component, for example, glucose, fructose, maltose or the like, to a soy sauce *moromi.*

In the step of obtaining a soy sauce *moromi* soup, a soup of a soy sauce *moromi* is obtained by removing an insoluble solid content derived from a soy sauce raw material such as soybeans or wheat from a soy sauce *moromi* (lactic acid fermented product) containing the insoluble solid content. The thus obtained soy sauce *moromi* soup is, in other words, a soup of a lactic acid fermented product or a soup of a lactic acid fermented product of a soy sauce *koji.* In this field, a soy sauce *moromi* obtained by lactic acid fermentation of a soy sauce *koji* is clearly distinguished from an aged *moromi* obtained by yeast fermentation of a soy sauce *moromi,* and the two are completely different. In general, the lactic acid and alcohol contents of a soy sauce *moromi* and the counts of a lactic acid bacterium and yeast thereof are 0.0 w/v% to 1.0 w/v% and 0.0 v/v% to 0.5 v/v% and 1×10⁶ CFU/mL to 1×10⁹ CFU/mL and 1×10² CFU/mL to 1×10⁶ CFU/mL, respectively, and the lactic acid and alcohol contents of an aged *moromi* and the counts of a lactic acid bacterium and yeast thereof are 0.0 w/v% to 1.0 w/v% and 2.5 v/v% to 3.5 v/v% and 10 CFU/mL to 1×10³ CFU/mL and 10 CFU/mL to 1×10⁴ CFU/mL, respectively.

The method for obtaining a soy sauce *moromi* soup by removing the insoluble solid content from a soy sauce *moromi* is not particularly limited but is, for example, a generally known solid-liquid separation method or the like, specifically, a pressing treatment, a filtration treatment or the like that is generally used in a method for manufacturing a soy sauce, more specifically, a pressing treatment using a compressor such as a press machine, a filtration treatment using a filter material such as diatomaceous earth and a filter cloth, a pressing filtration treatment in which a filtration treatment is performed using a compressor such as a press machine, a membrane filtration treatment using various permeable membranes such as a UF membrane and an MF membrane or the like. The solid-liquid separation method may be one type thereof alone or a combination of two or more types thereof but is preferably a combination of a pressing treatment using a compressor and a filtration treatment using a filter material.

A soy sauce *moromi* generally has a certain viscosity, and the viscosity is approximately 1,000 cP to 1,500 cP. By removing most of the insoluble solid content from a soy sauce *moromi,* the viscosity of the soy sauce *moromi* soup decreases largely. The viscosity of the soy sauce *moromi* soup is not particularly limited as long as the viscosity is lower than that of the soy sauce *moromi* used but is, for example, preferably 500 cP or less, more preferably 100 cP or less, further more preferably 50 cP or less, still further more preferably 20 cP or less. The viscosity is measured by the method described in the Examples below.

The soy sauce *moromi* soup contains yeast and other microorganisms in addition to the soy sauce lactic acid bacterium, and when the count of the other microorganisms is high, the lactic acid fermentation at the latter stage may not be appropriately performed. Therefore, when a soy sauce *moromi* soup is obtained, it is preferred to adopt a method capable of removing most of the microorganisms together with the insoluble solid content. When the lactic acid bacterium and the yeast are used as an indicator, for example, to check that the microorganisms have been removed from the soy sauce *moromi* soup, the count of the lactic acid bacterium in the soy sauce *moromi* soup is, for example, preferably 1.0×10⁸ bacteria/ml or less, more preferably 1.0×10⁷ bacteria/ml or less, further more preferably 1.0×10⁶ bacteria/ml or less, and the count of the yeast is, for example, preferably 1.0×10⁶ bacteria/ml or less, more preferably 1.0×10⁵ bacteria/ml or less, further more preferably 1.0×10⁴ bacteria/ml or less.

In the step of performing lactic acid fermentation with pH adjustment, a soy sauce lactic acid bacterium is added to the soy sauce *moromi* soup, and lactic acid fermentation is performed at 10°C to 40°C while stirring in such a manner that the pH falls in a certain range. The range of pH may be 5.0 to 7.0, which is a range in which the growth of the soy sauce lactic acid bacterium and/or the production of lactic acid are not prevented, but to prevent alkali denaturation due to an increase in the pH, the range is preferably 5.0 to 6.5, more preferably 5.2 to 6.5.

By subjecting the soy sauce *moromi* soup to lactic acid fermentation, the pH of the fermented liquid decreases due to the produced lactic acid. To increase the decreased pH, an alkaline agent is added. The alkaline agent is not particularly limited, and examples thereof include sodium carbonate, sodium hydroxide, potassium hydroxide, sodium hydrogen carbonate, potassium carbonate, disodium phosphate, trisodium phosphate, sodium pyrophosphate, sodium polyphosphate, ammonium carbonate, calcium carbonate, magnesium carbonate, magnesium hydroxide and the like. However, the alkaline agent is preferably sodium carbonate, sodium hydroxide or potassium hydroxide, which is generally used for manufacturing foods as an alkaline agent, more preferably sodium hydroxide. The alkaline agent may be one kind thereof alone or may be a combination of two or more kinds thereof.

The method for adjusting the pH is not particularly limited, and for example, the pH may be adjusted by continuously monitoring the pH of the fermented liquid and adding an alkaline agent each time (pH-stat method) or by regularly sampling the fermented liquid to check that the measured pH is lower than the lower limit (5.0) and adding an alkaline agent.

Because the soy sauce lactic acid bacterium may be killed when the pH of the fermented liquid becomes too low, the pH of the fermented liquid is preferably not less than 4.5, more preferably not less than 4.8.

The period of the lactic acid fermentation is not particularly limited as long as it is a period in which the production amount of lactic acid becomes 2.5 w/v% or more but is preferably a period in which the production amount of lactic acid becomes 4.0 w/v% or more, more preferably a period in which the production amount of lactic acid becomes 5.0 w/v% or more, further more preferably a period in which the production amount of lactic acid reaches the maximum amount. For example, referring to the production amount of lactic acid and the fermentation period in example 1 of the Examples below, the period of the lactic acid fermentation is preferably 100 hours or longer, more preferably 130 hours or longer, further more preferably 150 hours or longer, still further more preferably 200 hours or longer. Moreover, because a soy sauce having a lactic acid content of 5.0 w/v% or more was obtained by continuing lactic acid fermentation for 10 days while adjusting the pH, the period of the lactic acid fermentation is preferably within 30 days. The production amount of lactic acid may be determined continuously by determining the amount of lactic acid in the fermented liquid or determined regularly by sampling and measuring the amount of lactic acid each time.

The stirring is not particularly limited as long as it is stirring to make the pH of the fermented liquid even but is, for example, preferably stirring with a stirring blade at several dozen rpm, preferably stirring with a stirring blade at 20 rpm to 100 rpm, more preferably stirring at 40 rpm to 80 rpm. Here, when the stirring rate is high, the dissolved oxygen concentration increases, and the production amount of lactic acid may be reduced due to early fermentation of the yeast. Therefore, the stirring rate is preferably less than 100 rpm. Here, because the soy sauce *moromi* soup has a lower viscosity than the soy sauce *moromi,* the lactic acid fermentation using the soy sauce *moromi* soup has an advantage of enabling stirring with lower power.

The lactic acid fermentation may be performed in an open system, namely without putting a cover or a stopper on the container for fermentation (a bottle, a barrel, a tank or the like), in an aerating environment, as in the manufacture of a regular soy sauce by a brewing process or may be performed in a closed system.

In the step of performing lactic acid fermentation with pH adjustment, the soy sauce *moromi* soup from which the insoluble solid content has been removed in advance is used. Therefore, the material obtained after the lactic acid fermentation is a lactic acid fermented liquid having a low solid content, and the lactic acid fermented liquid itself may be used as a soy sauce. Further, for the purpose of removing the lactic acid bacterium or a residue present in the lactic acid fermented liquid or the like, the lactic acid fermented liquid is subjected to a treatment or the like at the latter stage of the yeast fermentation to be used in a method for manufacturing a regular soy sauce such as pressing, filtration and heating, and the obtained liquid part may be used as the soy sauce.

A specific aspect of the method of an aspect of the invention is the following method, but the invention is not limited thereto.

A seed starter of *Aspergillus sojae* is inoculated into a mixture of steamed soybeans and crushed roasted wheat and processed with aeration at 10°C to 40°C for around one day to four days to obtain a soy sauce *koji* (*koji* making), and subsequently, a material obtained by putting 100 parts by mass of the soy sauce *koji* into 50 parts by mass to 200 parts by mass of a saline solution having a sodium chloride concentration of 15% (w/v) to 35% (w/v) and further adding a soy sauce lactic acid bacterium (*Tetragenococcus halophilus*) is subjected to lactic acid fermentation and aging at 10°C to 40°C for 10 days to 200 days while appropriately stirring to obtain a soy sauce *moromi.*

Subsequently, the obtained soy sauce *moromi* is subjected to a pressing treatment using a vertical press-type compressor and then subjected to a filtration treatment using diatomaceous earth, and thus a soy sauce *moromi* soup is obtained. The obtained soy sauce *moromi* soup is adjusted to about pH 6.0.

Subsequently, a material obtained by adding a soy sauce lactic acid bacterium (*Tetragenococcus halophilus*) to the soy sauce *moromi* soup with adjusted pH is subjected to lactic acid fermentation. The lactic acid fermentation is performed at 10°C to 40°C while stirring with a stirring blade (20 rpm to 80 rpm). During the lactic acid fermentation, a part of the fermented liquid is sampled regularly, and the pH and the lactic acid concentration are measured. When the measured pH value is lower than 5.2, sodium hydroxide is added to the fermented liquid to adjust the pH of the fermented liquid to about 6.0. When the lactic acid concentration becomes 2.5 w/v% or more, the lactic acid fermentation is completed.

Subsequently, the lactic acid fermented product after the lactic acid fermentation is then heated directly or after subjecting to solid-liquid separation, and thus a soy sauce is obtained. The thus obtained soy sauce is a soy sauce having stronger *umami* and *koku* attribute and an excellent taste.

Hereinafter, the invention will be explained in more detail by way of Examples, however, the invention is not limited to these Examples, and the invention can take various modes as long as the problem of the invention can be solved.

### EXAMPLES

### [Example 1. Manufacture of High-lactic Acid Soy Sauce]

A seed starter of *Aspergillus sojae* was inoculated into a mixture of steamed soybeans and crushed roasted wheat at a ratio of 6:4, followed by *koji* making for 43 hours by an ordinary method, whereby a soy sauce *koji* was obtained.

Hundred parts by mass of the obtained soy sauce *koji* was put into 94 parts by mass of a saline solution (sodium chloride concentration of 24% (w/v)), and further a soy sauce lactic acid bacterium (*Tetragenococcus halophilus*) was added thereto. The resultant was subjected to lactic acid fermentation at 15°C to 25°C for 20 days while appropriately stirring according to an ordinary method. The soy sauce *moromi* after the completion of the lactic acid fermentation (viscosity of 1,350 cP) was pressed and subjected to a filtration treatment using a diatomaceous earth filter, and a pressed soup (viscosity of 10.7 cP) was obtained. The viscosity was measured at room temperature using a digital B-type viscometer "DV2T" (manufactured by Eko Instruments Co., Ltd.). The viscosity of a commercial *koikuchi* (dark-colored) soy sauce was 10.42 cP, and the viscosity of water was 5.31 cP.

The soy sauce lactic acid bacterium culture was prepared by inoculating a soy sauce lactic acid bacterium, *Tetragenococcus halophilus*, into a salt-containing YPG medium and culturing under the conditions of 20°C to 30°C for three days to seven days.

The pH (room temperature) of the pressed soup was adjusted to 6.0 using sodium hydroxide. The soy sauce lactic acid bacterium culture was added to the pressed soup after the pH adjustment, and the resultant (final bacterial count of 1×10⁶ CFU/mL) was subjected to a fermentation treatment at 25°C. During the fermentation treatment, the fermented liquid (160 L) was slowly stirred with a stirring blade (60 rpm) without adding any pressurized air.

Samples were taken during the fermentation treatment, and the pH values, the lactic acid concentrations and the turbidities were measured. The pH values were measured using a "glass electrode-type hydrogen ion concentration indicator HM-41X" (manufactured by DKK-TOA Corporation). The lactic acid concentrations were measured using a "biosensor BF-7 (manufactured by Oji Scientific Instruments Co., Ltd.)" by the enzyme electrode method. The turbidities were measured using a "turbidimeter UT-21" (manufactured by Corona Electric Co., Ltd.).

When the pH value of the fermented liquid measured after sampling decreased to 5.2 or less, sodium hydroxide was added to the fermented liquid to adjust the pH of the fermented liquid to 6.0 again.

When the lactic acid concentration of the fermented liquid measured after sampling reached 5.0 w/v%, the fermentation treatment was completed, and thus a soy sauce with a high lactic acid concentration (high-lactic acid soy sauce) was obtained.

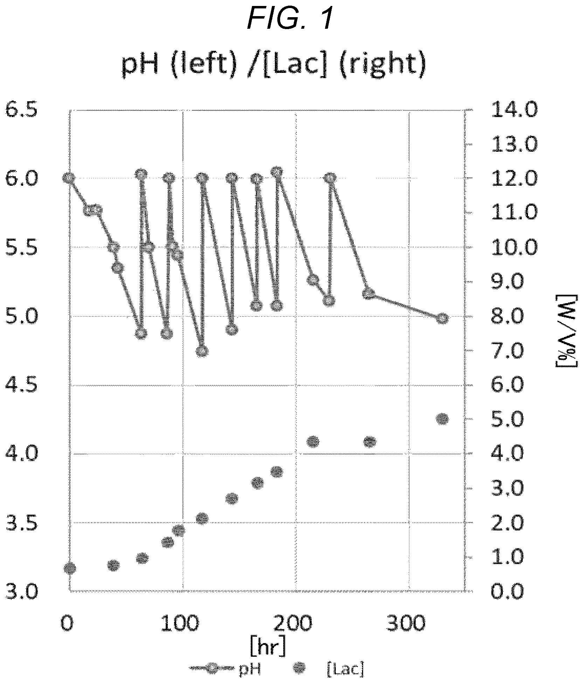

The results of the measurement of the pH values, the lactic acid concentrations and the turbidities of the pressed soup before the fermentation treatment and the high-lactic acid soy sauce after the fermentation treatment are shown in Table 1. The results of the pH values and the lactic acid concentrations of the fermented liquid measured over time by sampling during the fermentation treatment are shown in FIG. 1.

**[Table 1]**

| | | pH | Lactic Acid (w/v%) | Turbidity (ppm) |
|---|---|---|---|---|
| Pressed Soup | (before lactic acid fermentation) | 4.88 | 0.68 | 9.82 |
| High-Lactic Acid Soy Sauce | (after lactic acid fermentation) | 4.98 | 5.01 | 5,280 |

As Table 1 shows, by using the pressed soup obtained in lactic acid fermentation in the processes of the method for manufacturing a soy sauce using a brewing process and repeatedly adjusting the pH, the concentration of lactic acid which was produced as a lactic acid fermentation product could be made 2.5 w/v% or more without external addition. In addition, the lactic acid concentration could be increased.

### [Example 2. Sensory Evaluation of Cleared High-Lactic Acid Soy Sauce]

In the same manner as in example 1, a high-lactic acid soy sauce (turbidity of 6,000 ppm) was produced. The obtained high-lactic acid soy sauce was subjected to a centrifugation treatment, and thus a cleared high-lactic acid soy sauce (turbidity of less than 10 ppm; lactic acid concentration of 4.7 w/v%) obtained by removing the lactic acid bacterium cells from the high-lactic acid soy sauce was produced. Subsequently, by adding the cleared high-lactic acid soy sauce to the pressed soup (lactic acid concentration of 0.68 w/v%) produced in example 1, lactic acid-adjusted lactic acid soy sauces adjusted to lactic acid concentrations of 1.7 w/v%, 2.7 w/v% and 3.7 w/v% were produced. The pH values of the cleared high-lactic acid soy sauce and the lactic acid-adjusted lactic acid soy sauces were adjusted to 4.88, which is the pH of the pressed soup.

Sensory evaluation of the pressed soup, the lactic acid-adjusted lactic acid soy sauces and the cleared high-lactic acid soy sauce was performed. In the sensory evaluation, the intensities of "salty taste", *"umami* in the initial taste", *"umami* in the aftertaste", "*koku* attribute", "pungency in the initial taste" and "unnatural taste" were evaluated on a five-point scale by six panelists having an ability of discriminating the tastes of soy sauces from the taste felt with the tongue when a soy sauce at normal temperature was taken with a spoon, eaten and taken into the mouth using the pressed soup as an indicator. Here, the intensities were given scores of -2 to +2 with the score of the pressed soup regarded as 0. The averages and the standard deviations were calculated from the scores given by the panelists, and statistical testing was performed.

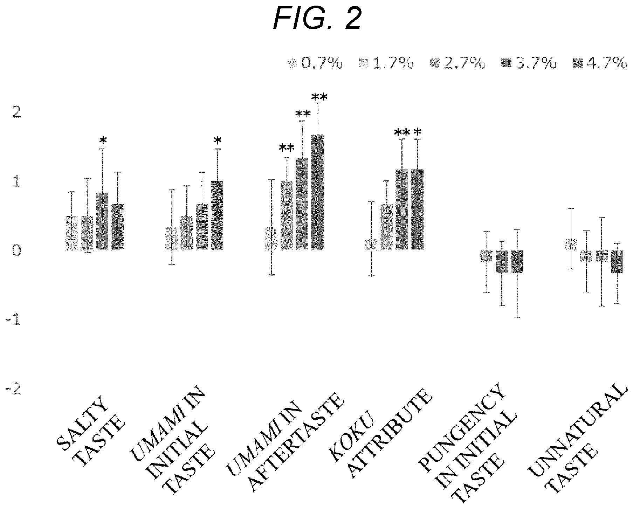

The results of the sensory evaluation are shown in Table 2 and FIG. 2. In Table 2, "*" and "**" indicate that the difference was significant (P < 0.05 and P < 0.01, respectively).

**[Table 2]**

| | Lactic Acid Concentration | | | | |
|---|---|---|---|---|---|
| Ave. | 0.7% | 1.7% | 2.7% | 3.7% | 4.7% |
| Salty Taste | 0.0 | 0.5 | 0.5 | 0.8* | 0.7 |
| *Umami* in Initial Taste | 0.0 | 0.3 | 0.5 | 0.7 | 1.0* |
| *Umami* in Aftertaste | 0.0 | 0.3 | 1.0** | 1.3** | 1.7** |
| *Koku* Attribute | 0.0 | 0.2 | 0.7 | 1.2** | 1.2* |
| Pungency in Initial Taste | 0.0 | 0.0 | -0.2 | -0.3 | -0.3 |
| Unnatural Taste | 0.0 | 0.2 | -0.2 | -0.2 | -0.3 |

| | Lactic Acid Concentration | | | | |
|---|---|---|---|---|---|
| S.D. | 0.7% | 1.7% | 2.7% | 3.7% | 4.7% |
| Salty Taste | 0.0 | 0.5 | 0.5 | 0.3 | 0.4 |
| *Umami* in Initial Taste | 0.0 | 0.4 | 0.5 | 0.4 | 0.5 |
| *Umami* in Aftertaste | 0.0 | 0.7 | 0.0 | 0.4 | 0.4 |
| *Koku* Attribute | 0.0 | 0.3 | 0.4 | 0.3 | 0.6 |
| Pungency in Initial Taste | 0.0 | 0.5 | 0.3 | 0.4 | 0.4 |
| Unnatural Taste | 0.0 | 0.3 | 0.3 | 0.3 | 0.7 |

As Table 2 and FIG. 2 show, the cleared high-lactic acid soy sauce had favorable tastes such as *umami* in the initial taste, *umami* in the aftertaste and *koku* attribute with a statistical significance. Moreover, the unfavorable tastes such as pungency in the initial taste and unnatural taste of the cleared high-lactic acid soy sauce were felt weak, and moderate salty taste was felt. As a result, the cleared high-lactic acid soy sauce had an excellent taste as a whole. Moreover, from the results of the sensory evaluation of the lactic acid-adjusted lactic acid soy sauces, it was found that the taste of the lactic acid soy sauce tended to be better as the lactic acid concentration was higher.

### [Example 3. Sensory Evaluation of Soy Sauces with Externally Added Lactic Acid]

By adding sodium lactate to the pressed soup (lactic acid concentration of 0.68 w/v%) produced in example 1, soy sauces with externally added lactic acid adjusted to lactic acid concentrations of 1.7 w/v%, 2.7 w/v%, 3.7 w/v% and 4.7 w/v% were produced. The pH values of the soy sauces with externally added lactic acid were adjusted to 4.88, which is the pH of the pressed soup.

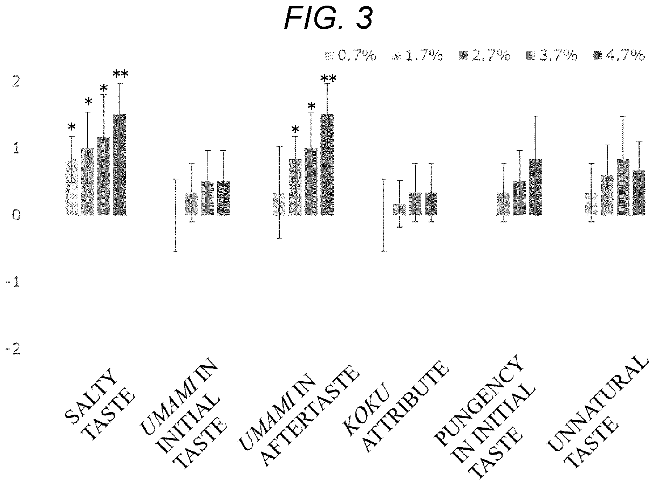

Sensory evaluation of the pressed soup and the soy sauces with externally added lactic acid was performed in the same manner as in example 2. The results are shown in Table 3A and FIG. 3.

**[Table 3A]**

| | Lactic Acid Concentration | | | | |
|---|---|---|---|---|---|
| Ave. | 0.7% | 1.7% | 2.7% | 3.7% | 4.7% |
| Salty Taste | 0.0 | 0.8* | 1.0* | 1.2* | 1.5** |
| *Umami* in Initial Taste | 0.0 | 0.0 | 0.3 | 0.5 | 0.5 |
| *Umami* in Aftertaste | 0.0 | 0.3 | 0.8* | 1.0* | 1.5** |
| *Koku* Attribute | 0.0 | 0.0 | 0.2 | 0.3 | 0.3 |
| Pungency in Initial Taste | 0.0 | 0.0 | 0.3 | 0.5 | 0.8 |
| Unnatural Taste | 0.0 | 0.3 | 0.6 | 0.8 | 0.7 |

| | Lactic Acid Concentration | | | | |
|---|---|---|---|---|---|
| S.D. | 0.7% | 1.7% | 2.7% | 3.7% | 4.7% |
| Salty Taste | 0.0 | 0.3 | 0.5 | 0.6 | 0.5 |
| *Umami* in Initial Taste | 0.0 | 0.5 | 0.4 | 0.5 | 0.5 |
| *Umami* in Aftertaste | 0.0 | 0.7 | 0.3 | 0.5 | 0.5 |
| *Koku* Attribute | 0.0 | 0.5 | 0.3 | 0.4 | 0.4 |
| Pungency in Initial Taste | 0.0 | 0.0 | 0.4 | 0.5 | 0.6 |
| Unnatural Taste | 0.0 | 0.4 | 0.4 | 0.6 | 0.4 |

As Table 3A and FIG. 3 show, the *umami* in the aftertaste of the soy sauces with externally added lactic acid was felt stronger as the amount of sodium lactate added was higher, but at the same time, excessive salty taste was felt. Moreover, as the amount of sodium lactate added was higher, unfavorable tastes such as pungency in the initial taste and unnatural taste tended to be felt. In this manner, although the lactic acid content could be increased without changing the pH by adding sodium lactate to the pressed soup, the obtained soy sauces did not have any natural taste.

Using the results of the sensory evaluation of the lactic acid-adjusted lactic acid soy sauces and the cleared high-lactic acid soy sauce produced in example 2 and the results of the sensory evaluation of the soy sauces with externally added lactic acid, statistical testing was performed. The results are shown in Table 3B.

**[Table 3B]**

| | Lactic Acid Concentration | | | | |
|---|---|---|---|---|---|
| p Value | 0.7% | 1.7% | 2.7% | 3.7% | 4.7% |
| Salty Taste | - | 0.26 | 0.17 | 0.36 | 0.02* |
| *Umami* in Initial Taste | - | 0.34 | 0.60 | 0.60 | 0.17 |
| *Umami* in Aftertaste | - | 1.00 | 0.34 | 0.34 | 0.60 |
| *Koku* Attribute | - | 0.60 | 0.09 | 0.01* | 0.05* |
| Pungency in Initial Taste | - | 1.00 | 0.09 | 0.02* | 0.01* |
| Unnatural Taste | - | 0.55 | 0.03* | 0.02* | 0.03* |

As Table 3B shows, there was statistically significant differences in salty taste, *koku* attribute, pungency in the initial taste and unnatural taste among the soy sauces. That is, as compared to the soy sauces with externally added lactic acid, to which sodium lactate was added, the lactic acid-adjusted lactic acid soy sauces and the cleared high-lactic acid soy sauce produced in example 2 had favorable tastes such as *koku* attribute with a statistical significance, had unfavorable tastes such as pungency in the initial taste and unnatural taste which were felt weak with a statistical significance and had reduced salty taste.

From the above results, the lactic acid-adjusted lactic acid soy sauces and the cleared high-lactic acid soy sauce produced in example 2 had an excellent taste as compared to the soy sauces with externally added lactic acid. Here, it is speculated that the lactic acid-adjusted lactic acid soy sauces and the cleared high-lactic acid soy sauce produced in example 2 contained various organic acids including lactic acid produced by lactic acid fermentation in combination and thus had natural *koku* attribute as compared to the soy sauces with externally added lactic acid.

### [Example 4. Sensory Evaluation of High-Lactic Acid Soy Sauces]

By adding a high-lactic acid soy sauce to the cleared high-lactic acid soy sauce using the high-lactic acid soy sauce (turbidity of 6,000 ppm) and the cleared high-lactic acid soy sauce (turbidity of less than 10 ppm) produced in example 2, turbidity-adjusted lactic acid soy sauces adjusted to turbidities of 500 ppm, 1,000 ppm, 3,000 ppm and 5,000 ppm were produced.

Sensory evaluation of the cleared high-lactic acid soy sauce, the turbidity-adjusted lactic acid soy sauces and the high-lactic acid soy sauce was performed. In the sensory evaluation, the intensities of the tastes "sweetness", "salty taste", "bitterness", "*umami*", "*koku* attribute", "meat-like taste" and "smoothness" were evaluated on a five-point scale by five panelists having an ability of discriminating the tastes of soy sauces from the taste felt with the tongue when a soy sauce at normal temperature was taken with a spoon, eaten and taken into the mouth using the cleared high-lactic acid soy sauce as an indicator. Here, the intensities were given scores of -2 to +2 with the score of the cleared high-lactic acid soy sauce regarded as 0. The averages and the standard deviations were calculated from the scores given by the panelists, and statistical testing was performed.

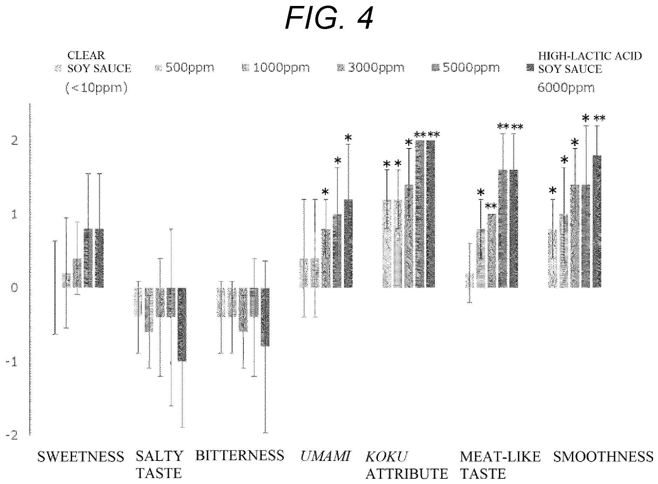

The results of the sensory evaluation are shown in Table 4 and FIG. 4. In Table 4, "*" and "**" indicate that the difference was significant (P < 0.05 and P < 0.01, respectively).

**[Table 4]**

| | Turbidity | | | | | |
|---|---|---|---|---|---|---|
| Ave. | <10 ppm*¹ | 500 ppm | 1000 ppm | 3000 ppm | 5000 ppm | 6000 ppm*² |
| Sweetness | 0.0 | 0.0 | 0.2 | 0.4 | 0.8 | 0.8 |
| Salty Taste | 0.0 | -0.4 | -0.6 | -0.4 | -0.4 | -1.0 |
| Bitterness | 0.0 | -0.4 | -0.4 | -0.6 | -0.4 | -0.8 |
| *Umami* | 0.0 | 0.4 | 0.4 | 0.8* | 1.0* | 1.2* |
| *Koku* Attribute | 0.0 | 1.2* | 1.2* | 1.4* | 2.0** | 2.0** |
| Meat-like Taste | 0.0 | 0.2 | 0.8* | 1.0** | 1.6** | 1.6** |
| Smoothness | 0.0 | 0.8* | 1.0* | 1.4* | 1.4* | 1.8** |

| S.D. | <10 ppm*¹ | 500 ppm | 1000 ppm | 3000 ppm | 5000 ppm | 6000 ppm*² |
|---|---|---|---|---|---|---|
| Sweetness | 0.0 | 0.6 | 0.7 | 0.5 | 0.7 | 0.7 |
| Salty Taste | 0.0 | 0.5 | 0.5 | 0.8 | 1.2 | 0.9 |
| Bitterness | 0.0 | 0.5 | 0.5 | 0.5 | 0.8 | 1.2 |
| *Umami* | 0.0 | 0.8 | 0.8 | 0.4 | 0.6 | 0.7 |
| *Koku* Attribute | 0.0 | 0.4 | 0.4 | 0.5 | 0.0 | 0.0 |
| Meat-like Taste | 0.0 | 0.4 | 0.4 | 0.0 | 0.5 | 0.5 |
| Smoothness | 0.0 | 0.4 | 0.6 | 0.5 | 0.8 | 0.4 |

| | | | | | | |
|---|---|---|---|---|---|---|
| *1: Clear soy sauce, 2*: High-lactic acid soy sauce | | | | | | |

As Table 4 and FIG. 4 show, the high-lactic acid soy sauce had *umami*, *koku* attribute, meat-like taste and smoothness with statistical significances, had sweetness and had these favorable tastes. Furthermore, the unfavorable tastes such as bitterness of the high-lactic acid soy sauce were felt weak, and the salty taste was also reduced. As a result, the high-lactic acid soy sauce had an excellent taste as a whole. Moreover, from the results of the sensory evaluation of the turbidity-adjusted lactic acid soy sauces, it was found that the taste of a lactic acid soy sauce tends to be better as the turbidity is higher.

From the above results, it was found that a lactic acid soy sauce with high palatability to which a peculiar favorable taste is given because a large amount of a soy sauce lactic acid bacterium is contained is obtained by continuous lactic acid fermentation using a pressed soup. Here, when an animal lactic acid bacterium and a lactic acid bacterium for pickles are used, the flavor is impaired due to the peculiar smell such as pickle's smell. However, the high-lactic acid soy sauce and the cleared high-lactic acid soy sauce contained a large amount of the soy sauce lactic acid bacterium and thus had a soy sauce-like natural flavor. Furthermore, while the soy sauces with externally added lactic acid, to which sodium lactate was added, had salty taste which was excessively enhanced due to the influence of the sodium ions, the high-lactic acid soy sauce contained the soy sauce lactic acid bacterium and thus had a smooth flavor with reduced salty taste.

### [Example 5. Evaluation of Influence of Yeast in Manufacture of High-Lactic Acid Soy Sauce]

The soy sauce yeast culture was prepared by inoculating *Zygosaccharomyces rouxii* into a salt-containing YG medium and culturing under the conditions of 20°C to 30°C for one day to three days.

By adding sodium hydroxide to the pressed soup produced in example 1, the pH was adjusted to 6.0. The soy sauce yeast culture and the soy sauce lactic acid bacterium culture prepared in example 1 were added to the pressed soup after the pH adjustment, and the resultant was subjected to a fermentation treatment at 25°C. During the fermentation treatment, the liquid was slowly stirred with a stirring blade (60 rpm) without adding any pressurized air.

Samples were taken during the fermentation treatment, and the pH values, the lactic acid concentrations, the alcohol concentrations, the counts of the living lactic acid bacterium and the counts of the living yeast of the fermented liquid were measured. The alcohol concentrations were measured with "GAS CHROMATOGRAPH GC-2014" (manufactured by Shimadzu Corporation). The counts of the living lactic acid bacterium were measured by inoculating a diluted fermented liquid on an MRS agar plate and culturing under the conditions of 30°C for seven days. The counts of the living yeast were measured by inoculating a diluted fermented liquid on an YG agar plate and culturing under the conditions of 30°C for three days.

When the pH value of the fermented liquid measured after sampling decreased to 5.2 or less, sodium hydroxide was added to the fermented liquid to adjust the pH of the fermented liquid to 6.0 again.

When the lactic acid concentration of the fermented liquid measured after sampling reached 5.0 w/v%, the fermentation treatment was completed, and thus a high-lactic acid soy sauce was obtained.

The measurement results of the values of the fermented liquid over time obtained by sampling during the fermentation treatment are shown in Table 5.

**[Table 5]**

| Elapsed Time | Lactic Acid | Alcohol | Lactic Acid Bacterium Count | Yeast Count |
|---|---|---|---|---|
| (hour) | (w/v%) | (v/v%) | (×10⁴ cfu/mL) | (×10⁴ cfu/mL) |
| 0 | 0.49 | 0.04 | 460 | 11.0 |
| 74 | 1.18 | 0.06 | - | - |
| 93 | 2.46 | 0.09 | 30,000 | 3.3 |
| 135 | 3.52 | 0.12 | - | - |
| 159 | 4.50 | 0.15 | 57,000 | 12.9 |
| 240 | 5.14 | 0.16 | 49,000 | 24.0 |

As Table 5 shows, it was found that, when the pressed soup was used, while the count of the living yeast and the alcohol concentration hardly increased even in the presence of yeast, the count of the living lactic acid bacterium and the lactic acid concentration increased, and a high-lactic acid soy sauce was obtained.

In the continuous lactic acid fermentation using the pressed soup, the pH could be adjusted sufficiently even by weak stirring, and the lactic acid amount increased while the growth of the yeast was suppressed. Here, when a soy sauce *moromi* is used instead of a pressed soup, strong stirring with pressurized air or the like is required to adjust the pH. In this case, as in the regular method for manufacturing a soy sauce using a brewing process, yeast grew, and alcohol was produced while lactic acid was hardly produced (lactic acid concentration of less than 2.0 w/v%).

### INDUSTRIAL APPLICABILITY

When the soy sauce of an aspect of the invention is used as a seasoning, a favorable flavor can be given to the food to which the soy sauce is used due to the taste created when the contained soy sauce raw material and lactic acid or lactic acid and the lactic acid bacterium are mixed together.

### CROSS-REFERENCE TO RELATED APPLICATION

The present application claims priority of Japanese Patent Application No. 2021-149272 filed on September 14, 2021, the entire contents of which are incorporated herein as disclosure.

The entire descriptions of all the documents which are referred to in the detailed description of the invention of the present application, including Patent Literature 1, are incorporated herein as disclosure.

## Claims

1. A soy sauce which has a lactic acid content of 2.5 w/v% or more, wherein the lactic acid is not externally added.

2. A soy sauce which has a lactic acid content of 2.5 w/v% or more and which is a lactic acid fermented product of a pressed soup of a soy sauce *moromi.*

3. The soy sauce according to claim 2, wherein the lactic acid fermented product of a pressed soup of a soy sauce *moromi* is a lactic acid fermented product of a pressed soup of a soy sauce *moromi* obtained using a soy sauce lactic acid bacterium, *Tetragenococcus halophilus.*

4. The soy sauce according to claim 3, wherein the soy sauce contains the soy sauce lactic acid bacterium in such a manner that the turbidity is 500 ppm or more.

5. A method for manufacturing a soy sauce, including
a step of obtaining a soy sauce *moromi* soup by subjecting a soy sauce *moromi* to a solid-liquid separation treatment and
a step of obtaining a soy sauce having a lactic acid content of 2.5 w/v% or more by subjecting the soy sauce *moromi* soup to lactic acid fermentation with a soy sauce lactic acid bacterium while adjusting to pH 5.0 to 7.0 using an alkaline agent.

6. The method for manufacturing a soy sauce according to claim 5, wherein the alkaline agent is at least one kind of alkaline agent selected from the group consisting of sodium carbonate, sodium hydroxide and sodium hydrogen carbonate.
